# EUROPEAN PATENT APPLICATION

(11) **EP 2 360 451 A2**
(43) Date of publication of application: **24.08.2011**
(21) Application number: 11154030.8
(22) Date of filing: 10.02.2011
(51) Int. Cl.: G01C 21/32

(54) **Navigation device and map data product**

(30) Priority: 16.02.2010 JP 2010031189
(71) Applicant: Clarion Co., Ltd., Saitama 330-0081 (JP)
(72) Inventor: Aikawa, Tetsumori, Saitama 330-0081 (JP); Shimokawa, Takayoshi, Saitama 330-0081 (JP)
(74) Representative: Matias, Bruno M.

(57) **Abstract**

A navigation device includes: a storage unit 13 that stores map data divided into a plurality of files for a predetermined map range; an acquisition unit 10 that acquires map updating data for updating the map data; an extraction unit 10 that extracts at least one file from among the map data files; and an updating unit that updates the map data by storing new map data files based upon the map updating data in the storage unit, after having deleted the map data files from the storage unit 13 with the exception of the file extracted by the extraction unit 10.

## Description

The disclosure of the following priority application is herein incorporated by reference: Japanese Patent Application No. 2010-31189 filed February 16, 2010.

The present invention relates to a navigation device for a vehicle, and to a map data product that is used in this navigation device.

In the prior art, a navigation device is per se well known that performs vehicle guidance using map data stored upon a rewriteable storage medium such as a hard disk or the like. It is desirable to update the map data in such a navigation device with new details at appropriate timing. However, there has been the problem that it has not been possible to perform guidance of the vehicle while the map data is being updated, since it is not possible to read out the map data from the storage medium at that time.

Thus, navigation systems that attempt to solve this type of problem have been proposed, such as the one disclosed in Japanese Laid-Open Patent Publication 2006-170660. With this navigation system, while employing a navigation function that uses map data before updating stored in a map data storage means, concurrently map data after updating is written into a vacant region in the map data storage means, and thereby it is possible to perform vehicle guidance even while the map data is being updated.

However, this navigation system is not optimal from the viewpoint of manufacturing cost and so on, since it requires a map data storage means having a high capacity storage region that can simultaneously store both the map data before updating and also the map data after updating.

A navigation device according to a 1 st aspect of the present invention comprises: a storage unit that stores map data divided into a plurality of files for a predetermined map range; an acquisition unit that acquires map updating data for updating the map data; an extraction unit that extracts at least one file from among the map data files; and/or an updating unit that updates the map data by storing new map data files based upon the map updating data in the storage unit, after having deleted the map data files from the storage unit with the exception of the file extracted by the extraction unit.

According to a 2nd aspect of the present invention, the navigation device of the 1st aspect may further comprise a subject vehicle position detection unit that detects the position of the subject vehicle. In this navigation device, it is desirable that the extraction unit determines the file to be extracted on the basis of the position of the subject vehicle detected by the subject vehicle position detection unit.

According to a 3rd aspect of the present invention, in the navigation device of the 1 st or 2nd aspect, it is preferred that the updating unit deletes the file extracted by the extraction unit from the storage unit after having completed updating of the map data.

According to a 4th aspect of the present invention, in the navigation device of the 3rd aspect, it is desirable that: the same file names are used for corresponding ones of the files of the map data stored in the storage unit and the files of new map data based upon the map updating data; the updating unit, when storing the files of new map data in the storage unit, changes the name of the file corresponding to the file extracted by the extraction unit; and the file name having been changed is returned to its original file name after having deleted the file extracted by the extraction unit from the storage unit.

A map data product according to a 5th aspect of the present invention, which is used in the navigation device of any one of the 1 st through 4th aspect, comprises map data that is divided into a plurality of files for a predetermined map range.

According to a 6th aspect of the present invention, in the map data product of the 5th aspect, the map data may include at least one file that specifies an entire map range corresponding to a first map scale all together and a plurality of files each divided up into a map range corresponding to a second map scale that is larger than the first map scale.

According to the present invention, it is possible to provide a navigation device that can perform vehicle guidance while updating map data, without any high capacity storage region being required.

### BRIEF DESCRIPTION OF THE DRAWINGS

Fig. 1 is a block diagram showing the structure of a navigation device;
Fig. 2 is a flow chart showing processing performed during map updating;
Fig. 3 is a figure for explanation of map data updating;
Fig. 4 is a further figure for explanation of map data updating;
Fig. 5 is another figure for explanation of map data updating;
Fig. 6 is another figure for explanation of map data updating;
Fig. 7 is another figure for explanation of map data updating;
Fig. 8 is another figure for explanation of map data updating;
Fig. 9 is another figure for explanation of map data updating;
Fig. 10 is another figure for explanation of map data updating;
Fig. 11 is yet another figure for explanation of map data updating; and
Fig. 12 is still another figure for explanation of map data updating.

### DESCRIPTION OF THE PREFERRED EMBODIMENTS

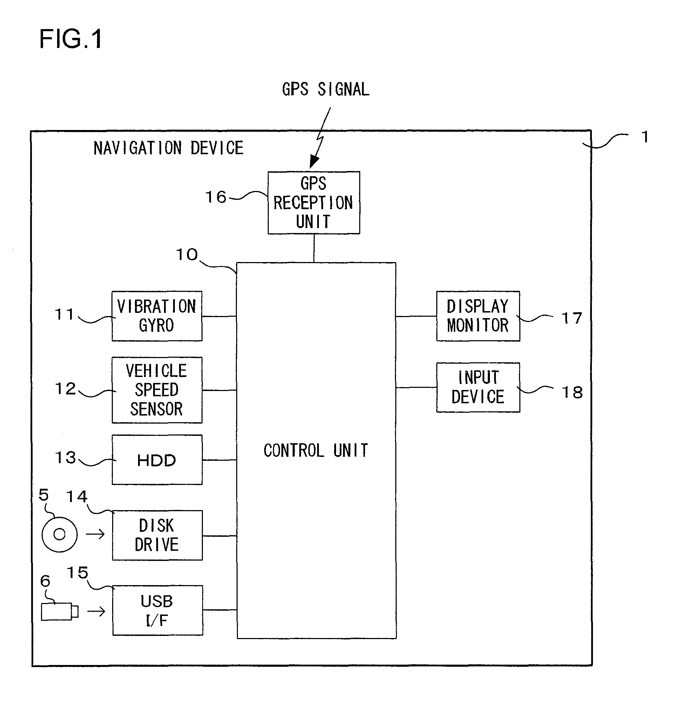

An embodiment of the navigation device of the present invention will now be explained with reference to the block diagram shown in Fig. 1. As shown in Fig. 1, this navigation device 1 includes a control unit 10, a vibration gyro 11, a vehicle speed sensor 12, a hard disk drive (HDD) 13, a disk drive 14, a USB interface (I/F) 15, a GPS (Global Positioning System) reception unit 16, a display monitor 17, and an input device 18.

The control unit 10 includes a microprocessor and peripheral circuitry of various types including RAM and ROM and so on, and executes processing of various types on the basis of a control program and map data and so on, recorded upon the HDD 13. Processes of various types for guiding the subject vehicle to its destination are executed by this control unit 10. For example, search processing for finding a destination when the destination is set, search processing for finding a recommended path to a destination that has been set, processing for detecting the position of the subject vehicle, display processing for displaying images of various types, audio output processing during route guidance, and so on are executed.

The vibration gyro 11 is a sensor for detecting the angular velocity of the subject vehicle. The vehicle speed sensor 12 is a sensor for detecting the speed of the subject vehicle. By the state of motion of the subject vehicle being repeatedly calculated by the control unit 10 at predetermined time intervals on the basis of the results of detection by these sensors, the amount of shifting of the subject vehicle is obtained, and thereby the current position of the subject vehicle is detected.

The HDD 13 is a rewriteable non-volatile recording medium upon which information is recorded. Information such as a control program for execution by the control unit 10 in order to perform the processing described above and map data and so on is recorded upon this HDD 13.

The map data recorded upon the HDD 13 is classified according to its map scale into six levels, level 1 through level 6, with lower levels relating to larger scale maps. In other words, the map data at level 1 relates to the most detailed maps, and conversely, the map data at level 6 relates to the map covering the widest area.

At each of the levels of map data, a plurality of sections that are divided up into predetermined map ranges are established upon the map. Each of these sections is termed a "mesh". Furthermore, the map data for all the levels except levels 5 and 6, in other words the map data for levels 1 through 4, consists of a plurality of separate files, divided up by units of mesh. On the other hand, the map data at levels 5 and 6 each consists of one file for all the meshes together. In other words, upon the HDD 13, there are stored two map data files for levels 5 and 6, each giving all of the data for its corresponding map level together, and a large number of map data files for each of the levels 1 through 4, each consisting of one mesh at the corresponding map scale. These various files of map data on the HDD 13 constitute a map database.

In the map data recorded upon the HDD 13, roads are described as broken up into predetermined road sections. Each of these road sections is termed a "link". In other words, in the map data, each road consists of one or more links. For each of these links, a value (a so called "link cost") is established, related to the time that is required for the vehicle to pass along that link. The points at which the links connect together are termed "nodes". Each of these nodes corresponds to position information upon the map, expressed by using map coordinates. The position and the shape of each of the roads upon the map is determined on the basis of this position information for its nodes.

On the basis of map updating data acquired by the navigation device 1, each of these files of map data recorded upon the HDD 13 can be rewritten and replaced by a new map data file. Using a personal computer or the like, the user of the navigation device 1 downloads map updating data from a server device not shown in the figures, and records this map updating data upon a DVD 5 or a USB flash drive 6. The map updating data is acquired by the navigation device 1 by this DVD or flash drive being read into the navigation device 1. Updating of the map data upon the HDD 13 is performed by rewriting each of the map data files in this manner. For example, if a new road has been opened, a new facility has been provided, or the like, then a file that includes information specifying this new road or facility is supplied as a new map data file.

When a road that has been newly opened passes through a region that is the subject of updating and arrives at some other region, the information for this road that is supplied in the map updating data includes not only the portion of this road within the region that is the subject of updating, but also up to other points that are connected to other roads. In other words, the information that is supplied as map data after updating is continued up to points at which connections to roads that already exist are ensured. By doing this, it is possible to prevent roads that have been added by the map data after updating being interrupted partway along, and to prevent them matching badly with roads that already exist.

It should be explained that while, in the above description, an example has been explained in which the map data used by the navigation device 1 is recorded upon the HDD 13, it could also be recorded upon some other rewriteable recording medium other than a HDD. For example a flash memory or the like could be used, instead of an HDD.

The disk drive 14 is a device for reading out map updating data recorded upon the DVD 5, and has a disk drive mechanism and a pickup mechanism and so on. When a DVD 5 is loaded into this disk drive 14, the map updating data recorded upon the DVD 5 is read out by the disk drive 14, and is outputted to the control unit 10. By doing this, the map updating data is read in from the DVD 5 to the navigation device 1. It should be understood that, for example, a recordable type DVD such as a DVD-R or the like may be used as the DVD 5.

The USB interface 15 has a slot portion for loading a USB flash drive 6. When a USB flash drive 6 is loaded into this slot portion, the map updating data recorded upon the USB flash drive 6 is read out by the USB interface 15, and is outputted to the control unit 10 after having been subjected to predetermined interface processing. By doing this, the map updating data is read in from the USB flash drive 6 to the navigation device 1.

It should be understood that, instead of the user downloading map updating data from a server device and recording it on a DVD 5 or a USB flash drive 6 as described above, it would also be acceptable for the manufacturer of the navigation device or the like to arrange to distribute to the user, via the postal service, or the like, a DVD 5 or a USB flash drive 6 upon which map updating data has been recorded in advance. In this case, the DVD 5 would not need to be a recordable type DVD as described above. Or, instead of using a DVD 5 or a USB flash drive 6, it would also be acceptable to use a recording medium of some other type, for example a CD or a memory card or the like.

The GPS reception unit 16 receives GPS signals transmitted from the GPS satellites and outputs them to the control unit 10. As information for obtaining the position of the subject vehicle and the current time, these GPS signals include information relating to the positions of the GPS satellites that transmit these GPS signals and the time points of transmission. Accordingly, by receiving GPS signals from at least a predetermined number of GPS satellites, it is possible to calculate the current position of the subject vehicle and the current time on the basis of this information. And the final subject vehicle position is obtained on the basis of the subject vehicle position as calculated based upon the GPS signals received by this GPS reception unit 16, and on the basis of the subject vehicle position as calculated based upon the results of detection by the vibration gyro 11 and the vehicle speed sensor 12 described above.

The display monitor 17 is a device for enabling the navigation device 1 to display screens of various types, and includes a liquid crystal display or the like. Map screens and so on are displayed by this display monitor 17. The details of each screen displayed upon the display monitor 17 are determined by screen display control performed by the control unit 10. This display monitor 17 may, for example, be installed in a position that can easily be seen by the user of the subject vehicle, such as upon the dashboard or within the instrument panel or the like.

The input device 18 is a device for the user to employ for operating the navigation device 1 by performing input operations of various types, and includes input switches and so on of various kinds. By operating this input device 18, for example, the user can input the name or the like of a facility or ground point that he wants to set as a destination, can select a destination from among registered points that he has registered in advance, can scroll the map in any desired direction, and so on. This input device 18 may be implemented as an operation panel or a remote control or the like. Or it would also be acceptable to arrange to implement the input device 18 as a touch panel that is integrated with the display monitor 17.

When the user operates the input device 18 to set a destination, the navigation device 1, for example, searches for a path to the destination for which the total cost of the links is a minimum on the basis of the link costs previously described that are set in the map data, and sets this path as the recommended path. The recommended path that has been set in this manner is displayed upon the map in a display format that can be distinguished from other roads. And thereafter, the navigation device 1 guides the vehicle to its destination according to the recommended path that has been set as described above, while displaying a map of the surroundings of the current vehicle position.

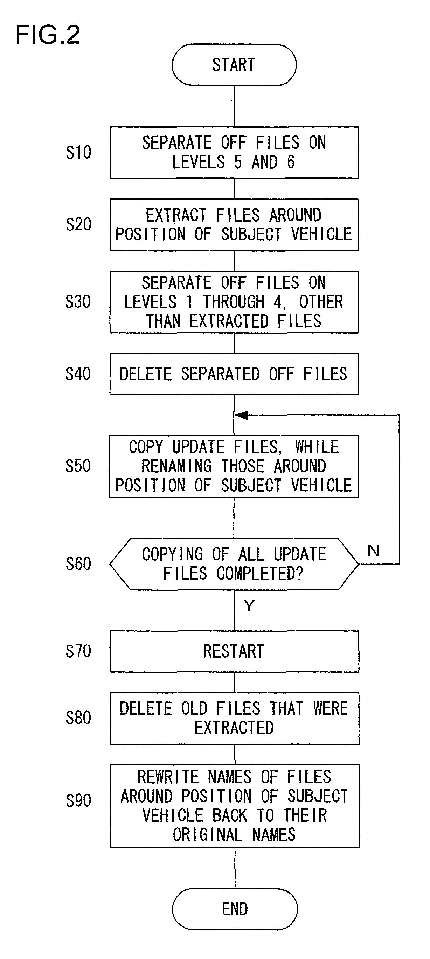

Next, the details of the processing performed by the navigation device 1 when updating map data will be explained. A flow chart for this processing executed by the control unit 10 when the map data is being updated is shown in Fig. 2. Execution of the flow chart of Fig. 2 is started when the user performs some predetermined operation using the input device 18, in a state in which a DVD 5 or a USB flash drive 6 upon which map updating data has been recorded is loaded into the disk drive 14 or the USB interface 15.

First in a step S10, among the map data files for levels 1 through 6 that are recorded upon the HDD 13, the control unit 10 separates off the files for the map data on levels 5 and 6 from the map database. In other words, from the map database upon the HDD 13, those map data files are separated off that are not divided up into meshes but that specify all of their meshes together.

Then in a step S20 the control unit 10 extracts certain map data, except for the map data that was separated off in the step S10; in more detail, among the files of map data for levels 1 through 4, it extracts those files that represent maps around the position of the subject vehicle. For example, as these files around the position of the subject vehicle, the control unit 10 may extract the one file that corresponds to the mesh in which the position of the subject vehicle is included, and the three files that correspond to the three meshes around this mesh that are adjacent to the vicinity of the subject vehicle. It would also be acceptable to vary the number of files that are extracted for each level. It should be understood that, before executing this step S20, the position of the subject vehicle is obtained by the control unit 10, as previously described, on the basis of the GPS signals received by the GPS reception unit 16, and on the basis of the results of detection from the vibration gyro 11 and the vehicle speed sensor 12.

Then in a step S30 the control unit 10 separates off the files of map data on levels 1 through 4 from the map database, with the exception of the files around the position of the subject vehicle that were extracted in the step S20. The files that have been separated from the map database in this manner cannot be used by the navigation device 1 for map display or for guidance of the subject vehicle, until the map data after updating is actually applied. In other words, while the program whose flow chart is shown in Fig. 2 is being executed, during the period from the step S30 until the navigation device 1 is restarted in a step S70 that will be described hereinafter, only the files around the position of the subject vehicle that were extracted in the step S20 are used by the navigation device 1 for performing map display and for guidance of the subject vehicle.

Then in a step S40 the control unit 10 deletes from the HDD 13 the map data files that were separated off from the map database in the steps S10 and S30. In other words, the files of map data for levels 5 and 6, and also the files of map data for levels 1 through 4 with the exception of the files around the position of the subject vehicle, are deleted from the HDD 13.

Then in a step S50, via the disk drive 14 or the USB interface 15, the control unit 10 reads in the map updating data recorded upon the DVD 5 or the USB flash drive 6, and copies updated files to the HDD 13 on the basis thereof. These updated files consist of a plurality of files each of which corresponds to one of the files of map data before updating that were recorded upon the HDD 13, and they are read into the control unit 10 as one portion of the map updating data. Due to this, these files of new map data are stored upon the HDD 13.

Here, the same file names are used for files that correspond among the files of the map data before updating and the update files, in other words, for files on the same level and that specify maps within the same mesh. Due to this, it is not necessary to change the control program and so on for the navigation device 1 even after the map data has been updated, because it is ensured that the map data after updating can be used for performing map display and guidance of the subject vehicle, in a similar manner to the original map data. Accordingly if those files among the update files that correspond to the files around the position of the subject vehicle that were extracted in the step S20 were to be copied to the HDD 13 with their file names just as they are without alteration, then there would be a duplication of names for the files around the position of the subject vehicle, and this would be undesirable. In order to avoid this, when copying the update files to the HDD in the step S50, the file writing is only performed after having changed the names of those files around the position of the subject vehicle.

It should be understood that the map updating data that is read in from the DVD 5 or the USB flash drive 6 could also include data other than these update files. For example, it would also be possible to record a portion of the control program, or a program to be executed by the control unit 10 for performing the map data update processing shown in the flow chart of Fig. 2, or the like, as map updating data upon the DVD 5 or the USB flash drive 6 along with the update files.

Then in a step S60 the control unit 10 makes a decision as to whether or not the copying of all of the update files to the HDD 13 in the step S50 has been completed. Until the copying of all of the update files has been completed, the flow of control returns to the step S50 and the copying of the update files is continued, whereas, when the copying of all of the update files has been completed, the flow of control proceeds to the step S70.

Then in the step S70 the control unit 10 restarts the navigation device 1. Subsequently the map data after updating is applied to the navigation device 1 by performing a restart in this manner. It should be understood that it would also be acceptable to arrange for the map data after updating to be applied without performing a restart.

Then in a step S80 the control unit 10 deletes from the HDD 13 the old map data files before updating that remain upon the HDD 13, in other words the files around the position of the subject vehicle that were extracted in the step S20. By doing this, the files around the position of the subject vehicle that are no longer required are deleted from the HDD 13 after the updating of the map data has been completed.

Then in a final step S90 the control unit 10 renames the update files (i.e. the update files that specify maps around the position of the subject vehicle) whose file names were changed when copying them to the HDD 13 in the step S50, and rewrites the names of these files to the original names. In other words, it returns the names of the update files corresponding to maps around the position of the subject vehicle, whose names were changed in the step S50 in order to avoid duplication with the files for maps around the position of the subject vehicle that were extracted in the step S20, back to their original file names before they were changed. By doing this, it becomes possible to employ these files as well in the subsequent processing by the navigation device 1, in a similar manner to the other map data after updating.

After the step S90 has been executed, the control unit 10 stops processing according to the flow chart of Fig. 2. The updating of the map data is executed by the navigation device 1 by performing the processing explained above.

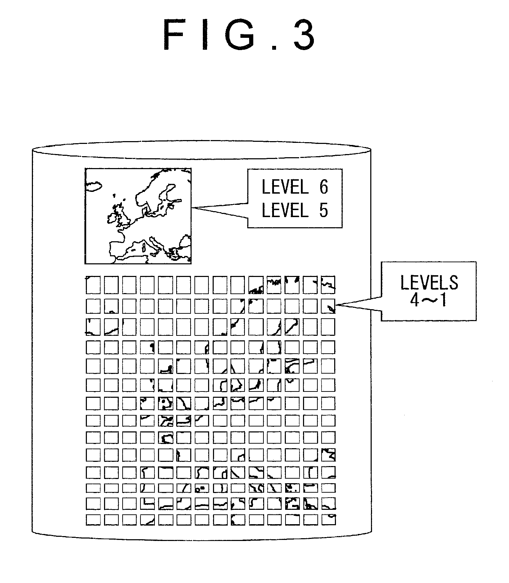

The map data updating executed by the processing described above will now be explained in concrete terms using Figs. 3 through 12. Fig. 3 shows an outline of the map data used by the navigation device 1. As previously described, this map data consists of map data on levels 5 and 6 for which all the meshes are held together, and map data on levels 1 through 4 that is divided up into meshes.

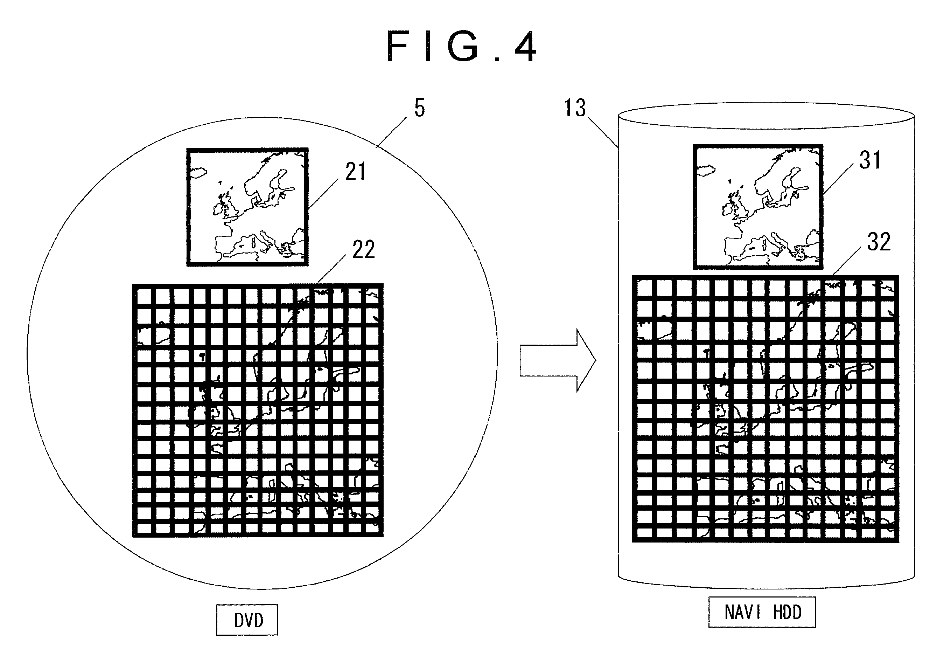

Fig. 4 shows an outline of the map updating data recorded upon the DVD 5 and of the map data before updating recorded upon the HDD 13. The map updating data recorded upon the DVD 5 includes map data 21 for levels 5 and 6 in which all of the meshes are held together, and map data 22 for levels 1 through 4 separated into meshes. In a similar manner, to map data before updating recorded upon the HDD 13 includes map data 31 for levels 5 and 6 in which all of the meshes are held together, and map data 32 for levels 1 through 4 separated into meshes. It should be understood that here an example is shown in which the map data upon the HDD 13 is updated by reading out map updating data from the DVD 5; but the situation would be the same in the case of performing updating of the map data upon the HDD 13 by reading out map updating data from the USB flash drive 6. The same is true throughout the following explanation.

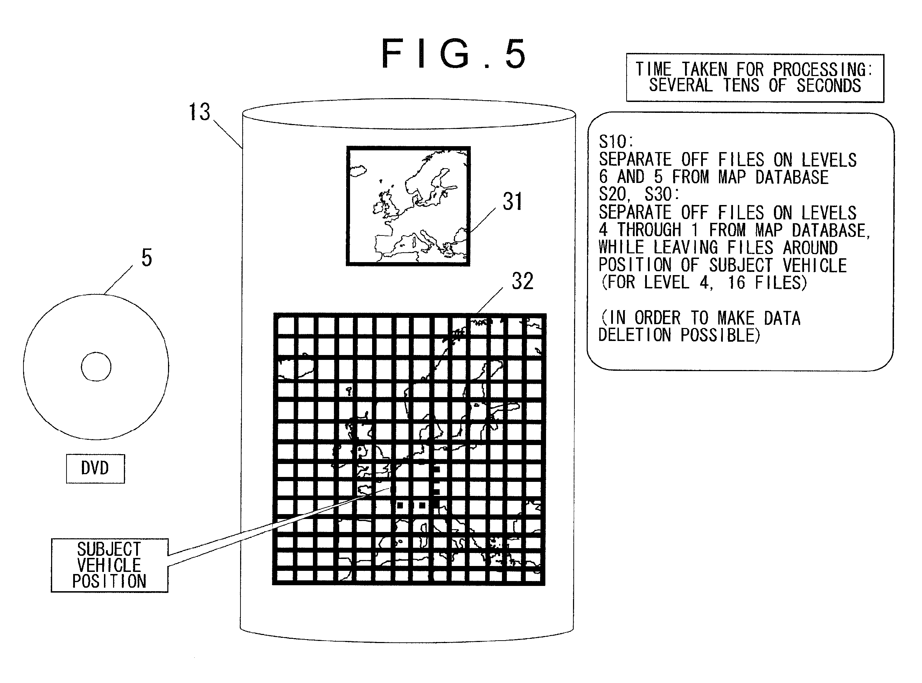

When performing updating of the map data, first, as shown in Fig. 5, in the step S10 of Fig. 2, the map data 31 for levels 5 and 6 is separated off from the map database recorded upon the HDD 13. Next, in the steps S20 and S30 of Fig. 2, the map data 32 for levels 1 through 4 is separated off from the map data 32, leaving only the files around the position of the subject vehicle (for example, portions corresponding to 16 meshes on level 4). This separation off of the map data is performed in order to make it possible to delete this map data from the HDD 13.

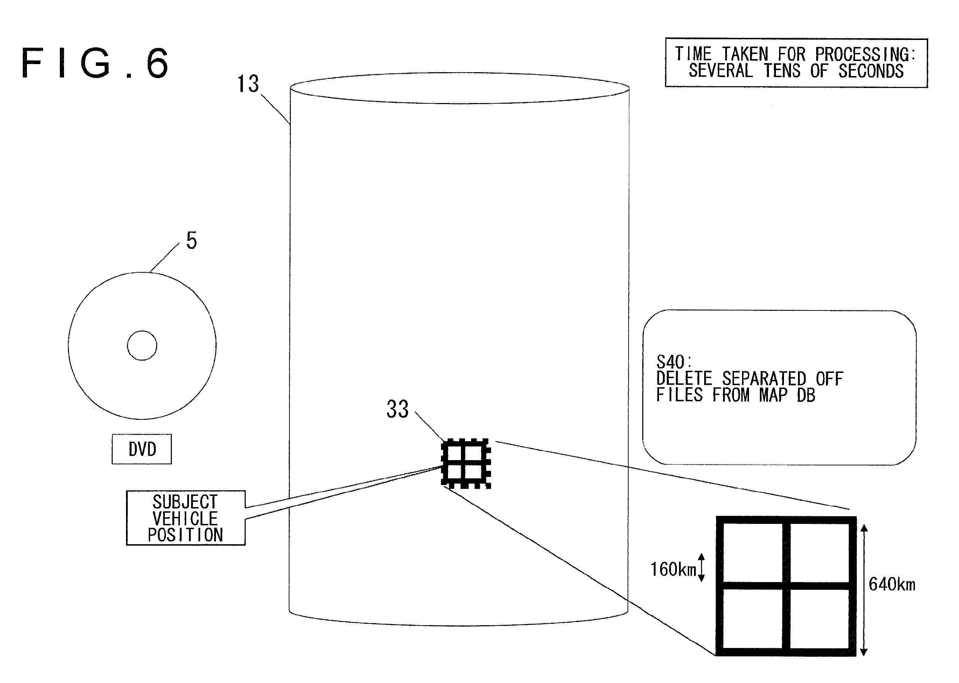

Next, in the step S40 of Fig. 2, the map data 31 and 32 that has thus been separated off from the map database is deleted from the HDD 13. As a result, as shown in Fig. 6, all the map data is deleted from the HDD 13, except for the files around the position of the subject vehicle. These files 33 around the position of the subject vehicle that remain upon the HDD 13 may, for example, consist of map data for 16 meshes with one mesh representing a map range of a square of side 160 km, in other words to map data corresponding to a square of side 640 km with the subject vehicle position somewhere near its center. It should be understood that the total time period for processing required by the steps S10 through S40 explained above may be, for example, around a few tens of seconds.

During the updating of map data that will be explained hereinafter, processing of various types, for example map display and so on, is performed on the basis of the map data in the navigation device 1, using the files 33 around the position of the subject vehicle. However, processing cannot be performed that requires map data other than the files 33 around the position of the subject vehicle; for example, map display and so on cannot be performed at a scale corresponding to the map data for levels 5 and 6.

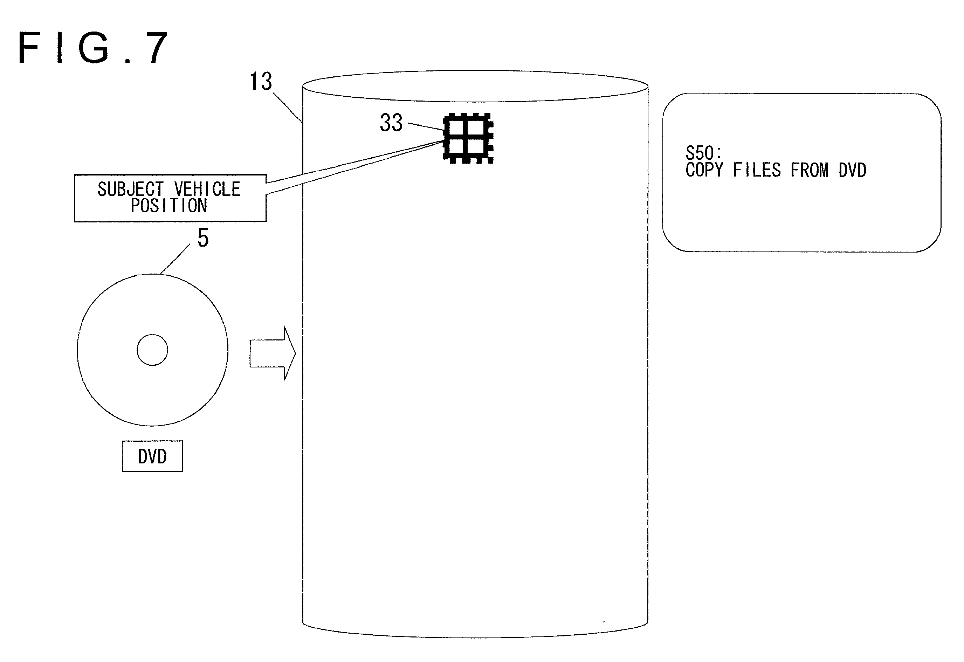

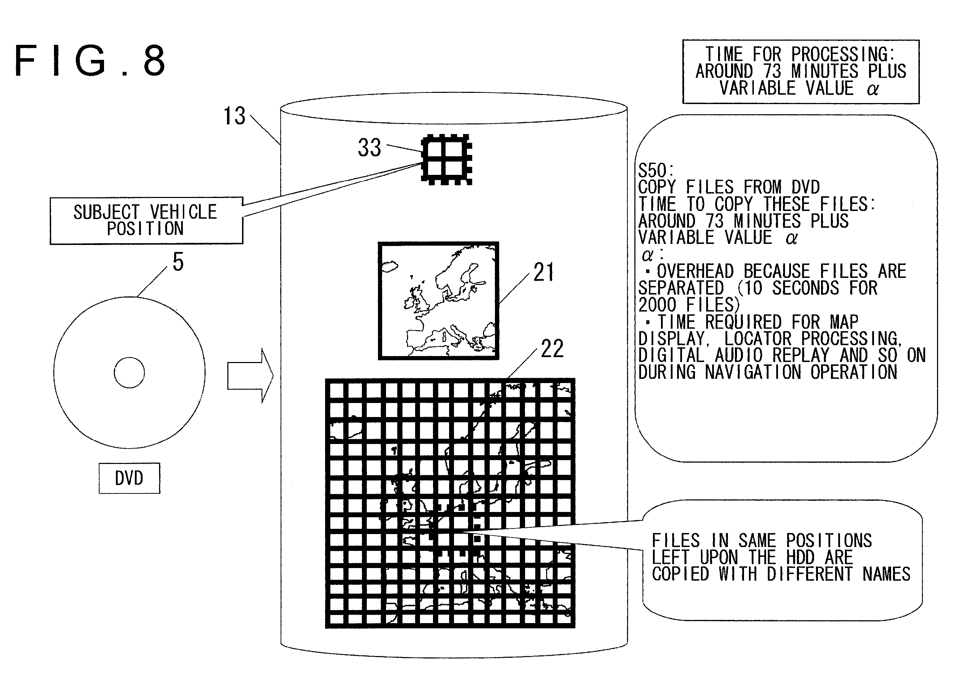

Next, as shown in Fig. 7, in the step S50 of Fig. 2, the files of map updating data read in from the DVD 5 are copied to the HDD 13. As a result, as shown in Fig. 8, in addition to the files 33 around the position of the subject vehicle, the map data 21 for levels 5 and 6 included in the map updating data in which all of the meshes are held together, and also the map data 22 for levels 1 through 4 included in the map updating data that is separated into meshes, are recorded upon the HDD 13. It should be understood that, among the map data 22 for the levels 1 through 4, those files that are in the same positions as the files 33 around the position of the subject vehicle that still remained recorded upon the HDD 13 are copied to the HDD 13 with different file names (i.e. with temporary file names). The time period that is required for this copying of the map updating data may be, for example, 73 minutes plus a variable time period α. This variable time period α is determined depending upon the overhead that is entailed due to the fact that the files in the map updating data are separated (for example around 10 seconds for 2000 files), and due to the processing state of the navigation device 1 during copying (for example, map display, locator processing, digital audio replay and so on).

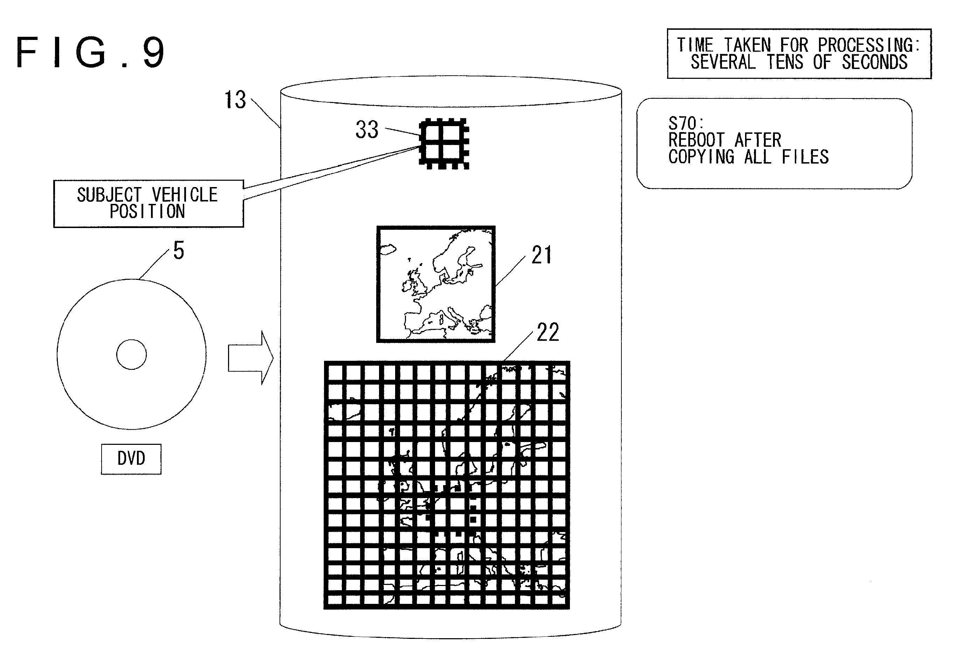

When all of the map updating data 21 and 22 has been copied to the HDD 13, then rebooting of the navigation device 1 is performed, in the step S70 of Fig. 2, as shown in Fig. 9. This rebooting processing occupies a time period of around, for example, several tens of seconds.

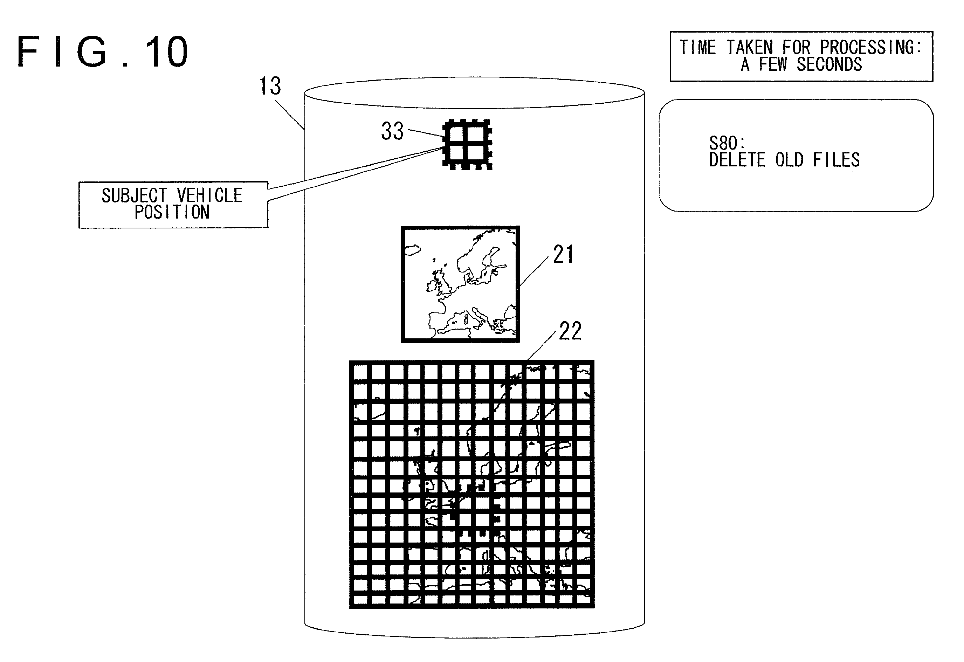

When the rebooting of the navigation device 1 has been completed, then in the step S80 of Fig. 2 the files for the old map data before updating are deleted from the HDD 13, as shown in Fig. 10. When this is done, the files 33 around the position of the subject vehicle are deleted. This deletion processing occupies a time period of around, for example, a few seconds.

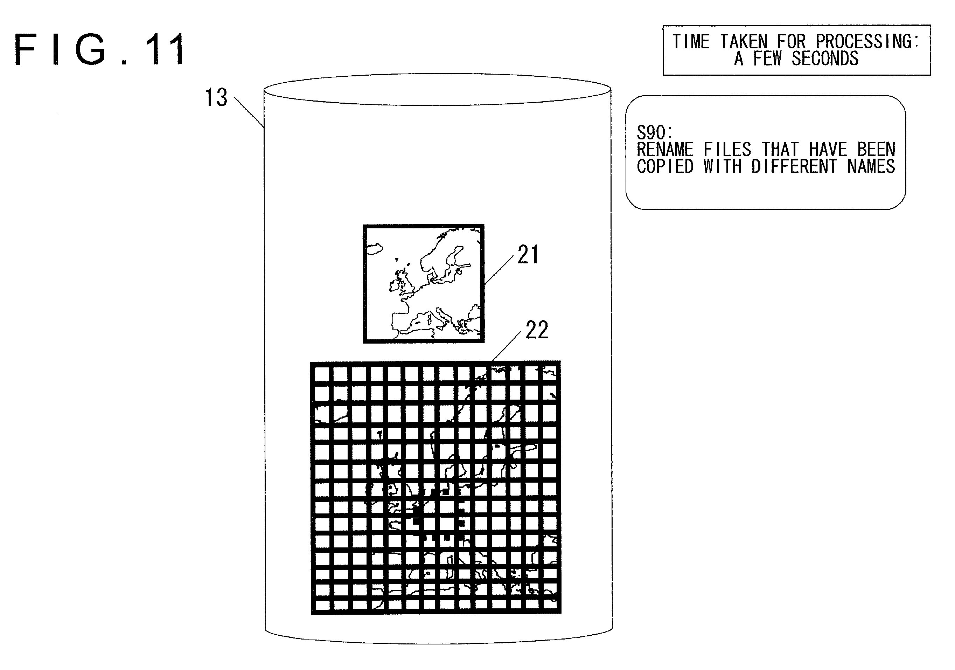

Finally, as shown in Fig. 11, in the step S90 of Fig. 2 rewriting of the file names of the files in the map updating data that were copied to the HDD 13 with different names (i.e. of the files representing the maps around the subject vehicle) is performed. By doing this, among the map data 22 for levels 1 through 4, the file names for the files that are in the same positions as the files 33 around the position of the subject vehicle that were deleted are returned to the original file names. This renaming processing occupies a time period of around, for example, a few seconds.

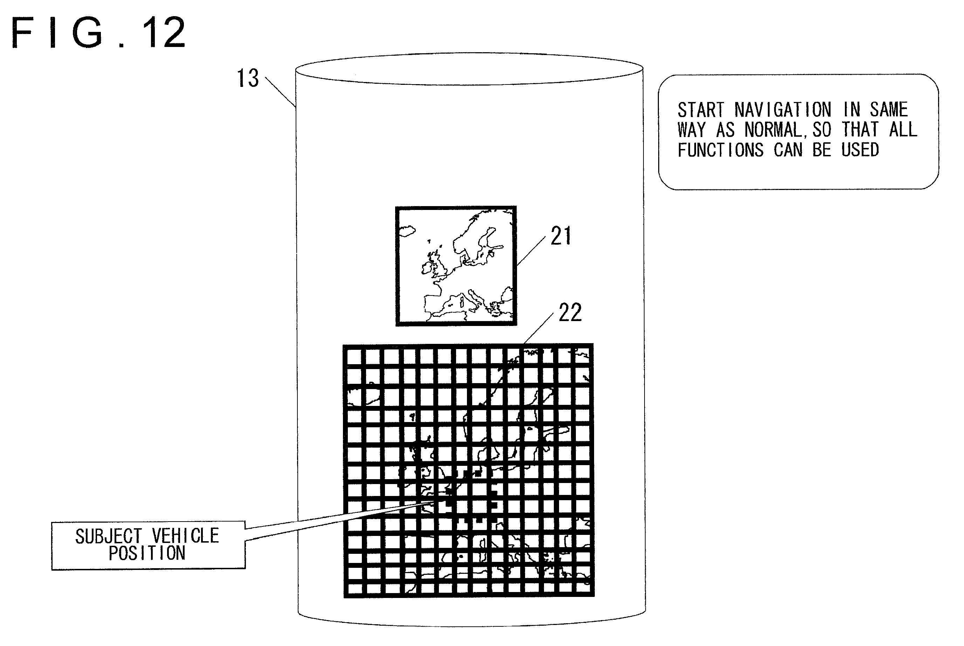

When the updating of the map data has been completed as explained above, subsequently, as shown in Fig. 12, the navigation device 1 is started in the same way as normal, in other words in the same way as before updating. And it becomes possible to utilize all of the functions of the navigation device 1 in the same way as before updating, now using the map data 21 and 22 that has been updated.

According to the embodiment of the present invention explained above, the following beneficial operational advantages may be obtained.
(1) With this navigation device 1, along with storing map data divided into a plurality of files for each of predetermined map ranges, also map updating data is acquired by the control unit 10 from the DVD 5 or the USB flash drive 6 via the disk drive 14 or the USB interface 15. Furthermore, in the processing by the control unit 10, certain files around the position of the subject vehicle are extracted from among the files of map data (in the step S20), and the files of map data are deleted from the HDD 13, with the exception of the files around the position of the subject vehicle that have been extracted (in the step S40). Thereafter, new map data files based upon map updating data that has been acquired are copied to the HDD 13 and stored (in the step S50), and updating of the map data is performed. Since this is done, it is possible for the navigation device 1 to perform map display and guidance of the subj ect vehicle during the updating of map data by using these files around the position of the subject vehicle, while at the same time deleting the map data before updating from the HDD 13, with the exception of the files around the position of the subject vehicle that have been extracted. By doing this, the navigation device 1 is able to perform guidance of the subject vehicle during map data updating, without any requirement for any large capacity storage region upon the HDD 13.
(2) During the processing by the control unit 10, the navigation device 1 detects the position of the subject vehicle on the basis of the GPS signals received by the GPS reception unit 16 and the results of detection by the vibration gyro 11 and the vehicle speed sensor 12. And in the step S20 the files that are to be extracted as the files around the position of the subject vehicle are determined on the basis of the position of the subject vehicle detected in this manner. Since this is done, it is possible reliably to extract the files that are needed for performing guidance of the subject vehicle during updating of the map data as the files around the position of the subject vehicle.
(3) After having completed the updating of the map data in the step S50, the control unit 10 deletes the files around the position of the subject vehicle that were extracted in the step S20 from the HDD 13 (in the step S80). Since it is arranged to delete the unnecessary files after the updating of the map data has been completed by doing this, accordingly it is possible to prevent useless consumption of the capacity of the HDD 13.
(4) When storing the files for the new map data upon the HDD 13 in the step S50, the control unit 10 changes the names of the files that correspond to the files around the position of the subject vehicle extracted in the step S20 to temporary file names.
Furthermore it is arranged for the control unit 10, after having deleted the files around the position of the subject vehicle from the HDD 13 in the step S80, to change (in the step S90) the file names of these files back from the temporary file names to the original file names. Due to this, it is possible to avoid any duplication between the file names during the file updating procedure. Furthermore it is possible to perform map display and guidance of the subject vehicle after the map updating has been completed while using the map data after updating in a similar manner to the original map data, without making any change to the control program for the navigation device 1.

In the embodiment described above, an example was explained in which the map data for levels 1 through 4 was divided into a plurality of files that were separated by units of meshes, while the map data for levels 5 and 6 consisted of only one file that held all the meshes. However, this map data structure should not be considered as being limitative of the present invention. For example, it would be acceptable to arrange for only the map data for level 6 to consist of one file, and for the map data for the other levels 1 through 5 to be divided a plurality of files separated by units of meshes. In other words, the map data include at least one file that specifies an entire map range corresponding to some predetermined map scale, and a plurality of files that are divided up into map ranges corresponding to larger map scales than that predetermined map scale. By adopting this type of map structure, it is possible to update the files that specify map data at comparatively small scale, and that are not used very much for vehicle guidance, all together. By contrast, it is possible to perform vehicle guidance even while updating the map data by extracting in advance a portion of the map data that is necessary for vehicle guidance and that specifies maps at comparatively large scale.

Or, it would also be acceptable to arrange to structure the map data on all of the levels as a plurality of files. It should be understood that the number of levels corresponding to map scales is not to be considered as being limited to the examples described above; it would be possible to adopt various different numbers of levels and map scales.

Furthermore, in the embodiment described above, an example was explained in which the map updating data was acquired by being downloaded from a server device and by then being recorded upon a DVD 5 or a USB flash drive 6, and by this DVD or flash drive then being read in by the navigation device 1. However, the way in which the map updating data is acquired is not to be considered as being limited to this method. For example, it would also be acceptable to arrange to download the map updating data directly to the navigation device 1 from a server device via a wireless communication network or the like.

The embodiment explained above and its possible variants are only given by way of example; the present invention is not to be considered as being limited by the details thereof, provided that its central concept is preserved. Moreover, the embodiment and possible variant embodiments described above could be employed in various appropriate combinations.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A navigation device, comprising:
a storage unit (13) that stores map data divided into a plurality of files for a predetermined map range;
an acquisition unit that acquires map updating data for updating the map data;
an extraction unit (10) that extracts at least one file from among the map data files; and
an updating unit (10) that updates the map data by storing new map data files based upon the map updating data in the storage unit (13), after having deleted the map data files from the storage unit (13) with the exception of the file extracted by the extraction unit (10).

2. A navigation device according to Claim 1, further comprising:
a subject vehicle position detection unit that detects the position of the subject vehicle, wherein:
the extraction unit determines the file to be extracted on the basis of the position of the subject vehicle detected by the subject vehicle position detection unit.

3. A navigation device according to Claim 1 or Claim 2, wherein:
the updating unit (10) deletes the file extracted by the extraction unit from the storage unit (13) after having completed updating of the map data.

4. A navigation device according to Claim 3, wherein:
the same file names are used for corresponding ones of the files of the map data stored in the storage unit (13) and the files of new map data based upon the map updating data;
the updating unit (10), when storing the files of new map data in the storage unit (13), changes the name of the file corresponding to the file extracted by the extraction unit (10); and
the file name having been changed is returned to its original file name after having deleted the file extracted by the extraction unit (10) from the storage unit (13).

5. A map data product that is used in a navigation device according to any of Claims 1 through 4, comprising:
map data that is divided into a plurality of files for a predetermined map range.

6. A map data product according to Claim 5, wherein:
the map data includes at least one file that specifies an entire map range corresponding to a first map scale all together, and a plurality of files each divided up into a map range corresponding to a second map scale that is larger than the first map scale.
